# EUROPEAN PATENT SPECIFICATION

(11) **EP 4 293 989 B1**
(45) Date of publication and mention of the grant of the patent: **17.12.2025**
(21) Application number: 22767300.1
(22) Date of filing: 11.01.2022
(51) Int. Cl.: H04L 67/148, H04L 51/04, H04L 67/141, H04L 67/133, H04L 65/1069

(54) **ELECTRONIC DEVICE FOR PROVIDING CONVERSATION SERVICE, AND OPERATION METHOD THEREFOR**
ELEKTRONISCHE VORRICHTUNG ZUR BEREITSTELLUNG EINES KONVERSATIONSDIENSTES UND BETRIEBSVERFAHREN DAFÜR
DISPOSITIF ÉLECTRONIQUE CONÇU POUR FOURNIR UN SERVICE DE CONVERSATION ET SON PROCÉDÉ DE FONCTIONNEMENT

(30) Priority: 08.03.2021 KR 20210030189
(43) Date of publication of application: 20.12.2023
(73) Proprietor: Samsung Electronics Co., Ltd., Suwon-si, Gyeonggi-do 16677 (KR)
(72) Inventor: KIM, Sungjin, Suwon-si, Gyeonggi-do 16677 (KR); PARK, Kyoungsu, Suwon-si, Gyeonggi-do 16677 (KR); KIM, Hyoungsu, Suwon-si, Gyeonggi-do 16677 (KR); SONG, Youngju, Suwon-si, Gyeonggi-do 16677 (KR); KIM, Myeongcheol, Suwon-si, Gyeonggi-do 16677 (KR); PARK, Sehee, Suwon-si, Gyeonggi-do 16677 (KR); BOLLAM, Raja Shekar, Suwon-si, Gyeonggi-do 16677 (KR); LEE, Inheon, Suwon-si, Gyeonggi-do 16677 (KR)
(74) Representative: HGF
(86) International application number: PCT/KR2022/000450
(87) International publication number: WO 2022/191403

(56) References cited:
- JP-A- 2016 534 602
- KR-A- 20110 057 504
- KR-A- 20120 020 162
- KR-A- 20170 108 989
- KR-A- 20210 020 571
- US-A1- 2018 139 247
- US-A1- 2019 222 550

## Description

### [Technical Field]

Various embodiments relate to a method and an electronic device for providing chatting service.

### [Background Art]

Recently, RCS (rich communication services or rich communication suite) for replacing SMS (short message service) have been introduced and actively used, and RCS standard is published by the GSM Association. The RCS, as a communication protocol between mobile telephone carriers or between a mobile phone and a carrier, may provide a richer service than a service of the SMS. The RCS may provide, for example, phonebook polling and a transmission function of in-call multimedia. The RCS must operate based on IMS (internet protocol multimedia subsystem), and is serviced as a title of advanced messaging, chat, message+, or SMS+.

US 2018/139247 A1 discusses a message sending method and device.

### [Disclosure of the Invention]

### [Technical Problem]

In a case of synchronously establishing a chat session between UEs in the RCS protocol-based session establishment process, when a network connection status of the called-side UE or the called-side IM (instant messaging) server is poor, the calling-side UE may be not capable of transmitting a chat message until it receives a 200 OK message from the called-side UE. In a case that the IM server transmits a message in User Datagram Protocol (UDP) format using a Session Border Controller (SBC) and Session Initiation Protocol (SIP), a packet drop may occur and message transmission/reception may fail due to UDP fragmentation issue. In the above operating structure, since the IM server and the SBC operate as a pair, when excessive traffic is generated in one of the two devices, both devices may need to be expanded together. In addition, in a structure in which a chat session between UEs is established synchronously and a message is transmitted and received based on SIP within the IM server, a corresponding message may need to include an RCS header of thousands of bytes.

Various embodiments, by establishing a session with the calling-side UE using information about a supportable function of the called-side UE obtained from an external database and by establishing a session with the called-side UE using the information about the supportable function of the called-side UE obtained from the called-side UE in a state in which the session is established, may provide an electronic device capable of asynchronously establishing a session for transmitting a chat between a calling-side UE and a called- side UE. Various embodiments may provide an electronic device capable of efficiently transmitting and receiving a message with a UE by transmitting and receiving a message having a transmission control protocol (TCP) format using a remote procedure call (RPC) protocol based on HTTP2.0.

### [Technical Solution]

The scope of protection of the present invention is defined by the appended independent claims. Optional features are specified by the dependent claims.

### [Advantageous Effects]

According to various embodiments, the electronic device may normally obtain a message transmitted from the calling-side UE by using an asynchronously established chat session regardless of a state of the called-side UE or the called-side IM server. According to various embodiments, because the electronic device transmits and receives a message having a TCP format using the RPC protocol, risk of the packet drop may be prevented and a cloud-type infrastructure suitable for scale-up and scale-out may be realized by flexibly expanding electronic devices regardless of expanding other devices (e.g., SBC).

### [Brief Description of Drawings]

FIG. 1 is a block diagram of an electronic device in a network environment, according to various embodiments.
FIG. 2 is a diagram illustrating a structure of a RCS-based communication system for transmitting and receiving a message between a first UE and a second UE, according to various embodiments.
FIG. 3 is a flowchart illustrating an operation for asynchronously establishing, by a first IM server, a session with a first UE and a second UE, according to various embodiments.
FIG. 4 is a sequence diagram illustrating an operation for asynchronously establishing, by the first IM server, a session with a first UE and a second UE, according to various embodiments.
FIG. 5 is a flowchart illustrating an operation for synchronously establishing, by the first IM server, a session with the first UE and the second UE, according to various embodiments.
FIG. 6 is a sequence diagram illustrating an operation for synchronously establishing, by the first IM server, a session with the first UE and the second UE, according to various embodiments.
FIG. 7 is a diagram illustrating a message transmitted/received between a UE and an SBC and a message transmitted/received between the SBC and an IM server, according to various embodiments.
FIG. 8 is a flowchart illustrating an operation for supporting, by the first IM server, a self chat function of the first UE or asynchronously establishing a session with the first UE 201 and the second UE, according to various embodiments.
FIG. 9 is a sequence diagram illustrating an operation for supporting, by the first IM server 220, the self chat function of the first UE, according to various embodiments.

### [Mode for Carrying out the Invention]

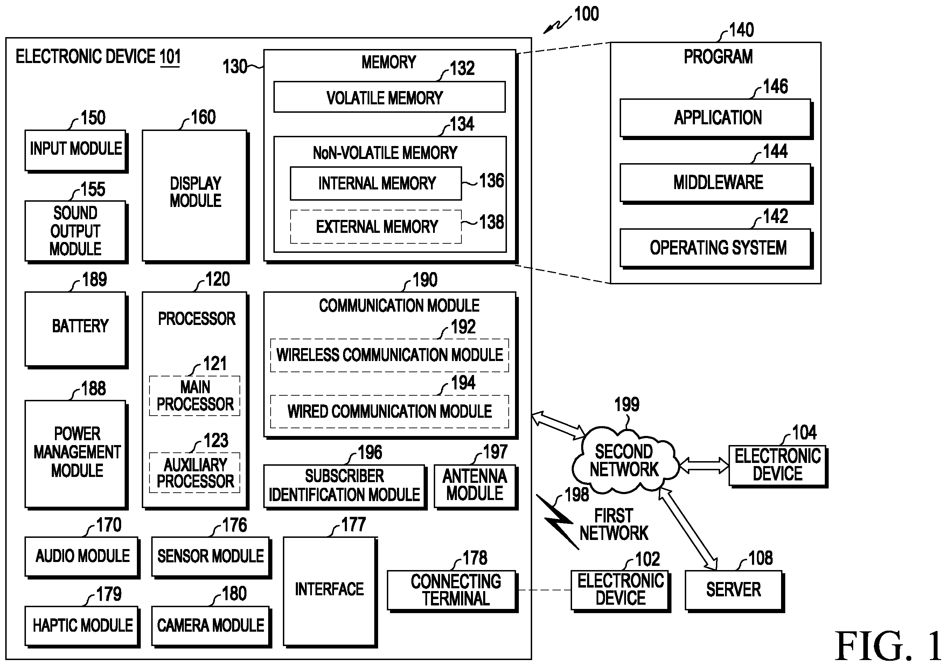

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

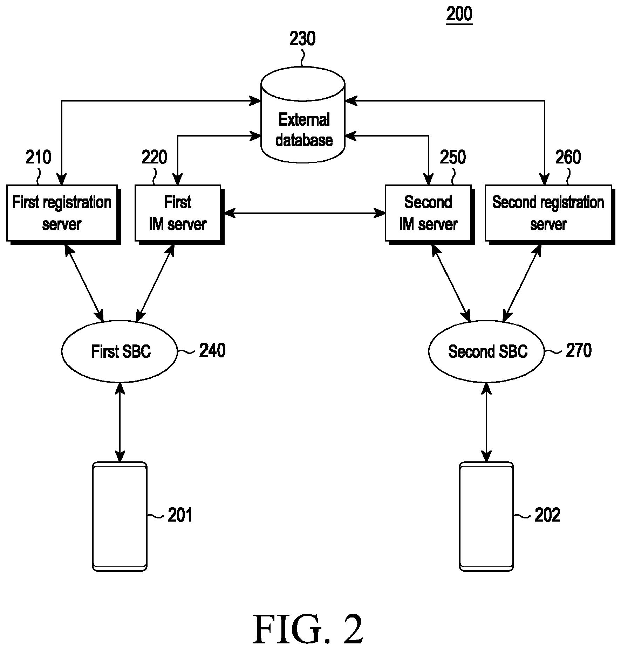

FIG. 2 is a diagram illustrating a structure of the RCS-based communication system 200 for transmitting and receiving a message between a first UE (e.g., a first UE 201 of FIG. 2) and a second UE (e.g., a second UE 202 of FIG. 2) according to various embodiments.

According to various embodiments, the communication system 200 may include UE (user equipment) 201 and 202, a registration server 210 and 250, IM (instant messaging) server 220 and 250, an external database (DB) 230, and SBC (session border controller) 240 and 270. Hereinafter, each of operations will be described based on the first UE 201, the first registration server 210, the first IM server 220, and the first SBC 240, and the following descriptions are also correspondingly applied to the second UE 202, the second registration server 260, the second IM server 250, and the second SBC 270. According to an embodiment, the first registration server 210, the first IM server 220, and the first SBC 240 may be operated by the same mobile network operator (MNO).

According to an embodiment, the first UE 201 may include hardware components that are at least partially identical to those of the electronic device 101 of FIG. 1. According to an embodiment, based on a rich communication suite (RCS) standard protocol, the first UE 201 (e.g., a calling-side device) may transmit a chat message to the second UE 202 (e.g., a called-side device) or may receive a chat message from the second UE (202). According to an embodiment, when the first UE 201 is connected to the communication network, the first UE 201 may proceed with a procedure related to the operation of registering the first UE 201 in the first registration server 210, and may transmit information about the first UE (201) (e.g., location information based on an IP address, device identification information, and information about a supportable function) to the first registration server 210. For example, when the first UE 201 first accesses a communication network (e.g., a 3G or LTE network) as the first UE 201 is switched from a power-off state to a power-on state, the first UE 201 may transmit, to the first registration server 210, at least one of location information of the first UE 201, device identification information of the first UE 201, or information about the supportable function of the first UE 201 (e.g., capability). According to an embodiment, the device identification information of the first UE 201 may include at least one of a tel URI (telephone uniform resource identifier) or a SIP URI (session initiation protocol uniform resource identifier) as information for identifying each UE. According to an embodiment, the information about the supportable function of the first UE 201 may include, as information about the supportable RCS service, information about various functions, for example, chat, file transfer, location sharing (geolocation), video share, image share, IP voice call, and IP video call. For example, as shown in Table 1 below, the information on the supportable function may include tag information corresponding to the supportable function (e.g., RCS capability). Table 1 is only an example, and the information on the supportable function may include tag information corresponding to various functions.

**[Table 1]**

| RCS capability | Tag information |
|---|---|
| chat | urn%3Aurn-7%3A3gpp-service.ims.icsi.oma.cpm.session |
| http method file transfer | urn%3Aurn-7%3A3gpp-application.ims.iari.rcs.fthttp |
| Location sharing (geolocation push) | urn%3Aurn-7%3A3gpp-application.ims.iari.rcs.geopush |
| chatbot | application/vnd.gsma.openrichcard.v1.2+json, application/vnd.gsma.xbotmessage.v1.2+json |

According to an embodiment, the first UE 201 may transmit, to the first IM server 220, a chat invitation message based on the RCS protocol, a chat invite message being a message requesting establishment of a chat session, and may obtain, from the first IM server 220, an acknowledgment message based on the RCS protocol, the acknowledgment message being a message accepting the establishment of the chat session.

According to an embodiment, the first UE 201 may receive and transmit the chat invitation message and the acknowledgment message which have TCP (transmission control protocol) format and a confirmation message, by using SIP (session initiation protocol) corresponding to a text-based application layer control protocol.

According to an embodiment, the first registration server 210 may receive information about the first UE 201 (e.g., location information, device identification information, information about a supportable function) from the first UE 201, and may store the received information. According to an embodiment, based on obtaining the device identification information of the first UE 201 and/or the information about the supportable function from the first UE 201, the first registration server 210 may transmit the information to the external database 230.

According to an embodiment, the first IM server 220 may include various hardware components like those applied to the electronic device 101 of FIG. 1, and hereinafter, the components of the electronic device 101 of FIG. 1 will be described by linking them to the first IM server 220 . According to an embodiment, the first IM server 220 may transmit a message based on the RCS protocol obtained from the first UE 201 to the second IM server 250 connected to the second UE 202, and may transmit a message based on the RCS protocol obtained from the second IM server 250 to the first UE 201. According to an embodiment, the first IM server 220 (e.g., the calling-side IM server) may request information about a supportable function (e.g., capability) of the called-side device (e.g., the second UE 202) from an external database 230, and may obtain a response to the requested information from the external database 230. According to an embodiment, the first IM server 220 may obtain, from the first UE 201, a chat invitation message based on the RCS protocol, the chat invitation message being a message requesting establishment of a chat session, and may transmit, to the first UE 201, an acknowledgment message based on the RCS protocol, the acknowledgment message being a message accepting the establishment of the chat session. According to an embodiment, the first IM server 220 may transmit, to the first UE 201, the acknowledgment message and receive, from first UE 201, the chat invitation message, by using RPC (remote procedure call) protocol based on HTTP2.0 (e.g. gRPC protocol), the chat invitation message and acknowledgment message being messages having a TCP format.

According to an embodiment, the external database 230 may obtain at least one of device identification information of a plurality of UEs or information on supportable functions of the plurality of UEs from the registration server operated by each mobile communication network operator, and may store the information. For example, the external database 230 may store information about the supportable functions of the first UE 201 in a form of a mapping table, the supportable functions of the first UE 201 corresponding to the device identification information of the first UE 201 obtained from the first registration server 210. According to an embodiment, based on obtaining a request for information about the supportable function of the specific UE from the first IM server 220, the external database 230 may determine whether the information about the supportable function of the specific UE is stored. For example, the external database 230 may identify device identification information of the specific UE included in the request, and may determine whether the information on the supportable function of the specific UE corresponding to the device identification information of the specific UE is included in the mapping table. According to an embodiment, if the information about the supportable function of the specific UE corresponding to the device identification information of the specific UE is stored, the external database 230 may transmit the information about the supportable function of the specific UE to the first IM server 220. According to an embodiment, if the information on the supportable function of the specific UE is not stored, the external database 230 may transmit, to the first IM server 220, a message (e.g., null information) indicating that the information about the supportable function of the specific UE does not exist.

According to an embodiment, the first SBC 240 may transmit, to the first IM server 220, a message received from the first UE 201 after performing authentication on the first UE 201 that requested the transmission of the message, and may transmit, to the first UE 201, the message received from the first IM server 220. According to an embodiment, a connection type between the first SBC 240 and the first UE 201 may include not only a wired/wireless type directly connected between the first SBC 240 and the first UE 201, but also a type connected between the first SBC 240 and the first UE 201 through a relay device. According to an embodiment, based on the session initiation protocol from the first UE 201, the first SBC 240 may convert the a chat invitation message transmitted based on the session initiation protocol from the first UE 201into RPC (remote procedure call) protocol (e.g., gRPC protocol) and transmit the converted message to the first IM server 220. According to an embodiment, the first SBC 240 may convert an acknowledgment message transmitted based on the remote procedure call (RPC) protocol (e.g., gRPC protocol) from the IM server 220 into a session initiation protocol and transmit the converted message to the first UE 201. In this case, the chat invitation message and the acknowledgment message may maintain the TCP format.

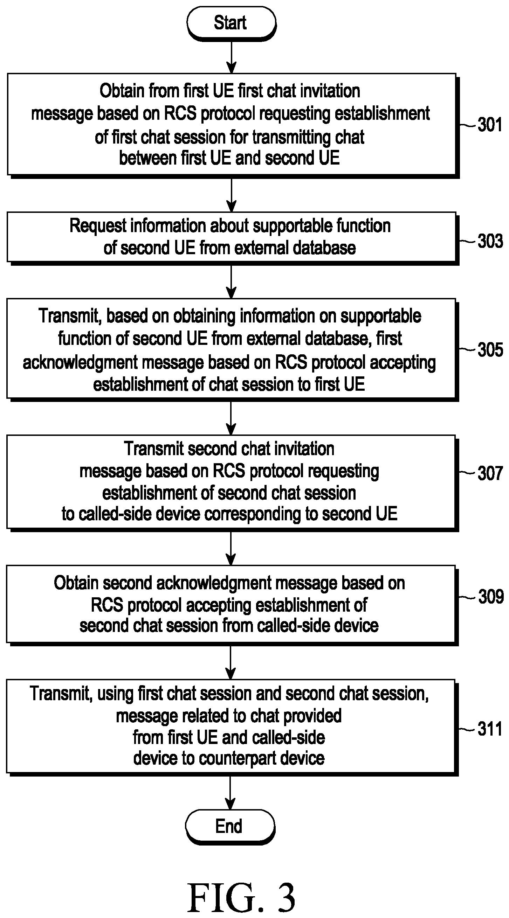

FIG. 3 is a flowchart illustrating an operation for asynchronously establishing, by the first IM server (e.g., the first IM server 220 in FIG. 2), a session with a first UE (e.g., the first UE 201 in FIG. 2) and a second UE (e.g., the second UE 202 in FIG. 2), according to various embodiments.

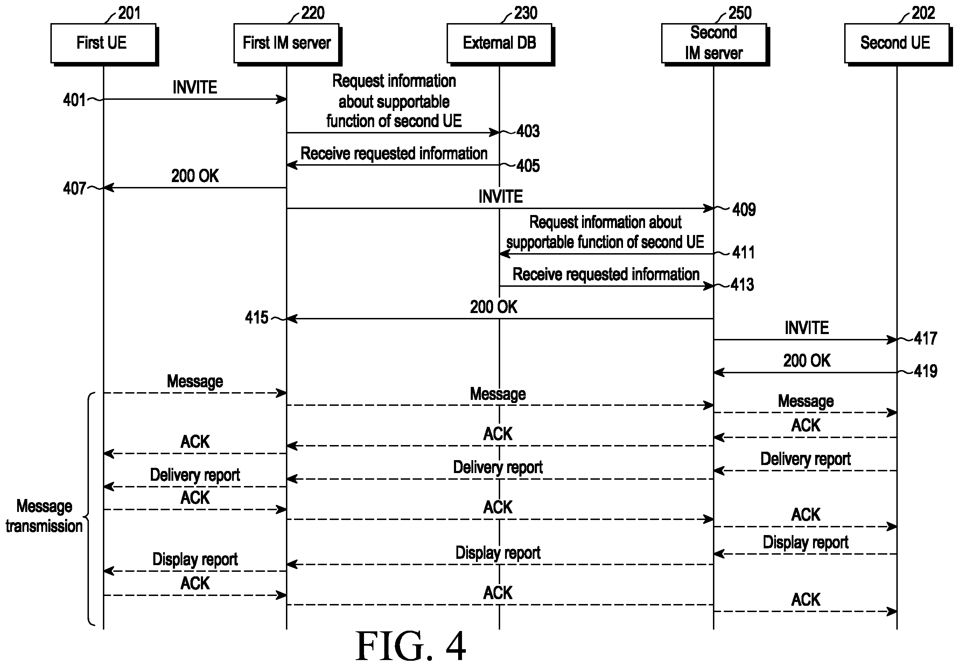

FIG. 4 is a sequence diagram illustrating an operation for asynchronously establishing, by the first IM server, a session with a first UE and a second UE, according to various embodiments.

In operation 301, according to various embodiments, the first IM server 220 (e.g., the processor 120 of FIG. 1) may obtain a first chat invitation message based on the RCS protocol from the first UE 201 through a communication module (e.g., communication module 190 in FIG. 1), the first chat invitation message being a message requesting establishment of a first chat session for transmitting a chat between the first UE 201 and the second UE 202. According to an embodiment, the first chat invitation message may include device identification information (e.g., at least one of tel URI or SIP URI) of the called-side device (e.g., the second UE 202). According to an embodiment, the first chat invitation message may include, a chat session establishment request message (e.g., INVITE message) defined in the RCS protocol, device identification information (e.g., at least one of tel URI or SIP URI) of the first UE 201 and/or information on the supportable function of the first UE 201 (e.g., capability). For example, at least a portion of the first chat invitation message may be configured in a format as shown in Table 2 below.

**[Table 2]**

| |
|---|
| INVITE tel :+821012345678 SIP/2.0 |
| Via: SIP/2.0/TCP 10.255.127.141:5060;branch=z9hG4bK-524287-1-88c7facf9b832683;rport;transport=TCPMax-Forwards: 70 |
| Route: sip:13.209.156.126:9672;lr |
| Contact: <sip:+821087654321@10.255.127.141:5060>;+sip.instance="<urn:gsma:imei: |
| 35267810-001680-0>";+g.3.gpp.icsi-ref="urn%3Aurn-7%3A3gpp-service.ims.icsi.oma.cpm.session";+g.3gpp.iari-ref="urn%3Aurn-7%3A3gpp-application.ims.iari.rcs.fthttp,urn%3Aurn-7%3A3gpp-application.ims.iari.rcs.geopush" |
| To: tel:+821012345678 |
| From: <tel:+821087654321>;tag=1aala93a |
| Call-ID: Uh3D48ZNcbRiE8ejUs7h-A..@10.255.127.141 |
| ... |

The above Table 2 may include (1) the tel URI (e.g., +821087654321) of the first UE 201 as the calling-side device, (2) the tel URI (e.g., +821012345678) of the second UE 202 as the called-side device, and (3) tag information indicating the capability (e.g., chatting, file transfer, location sharing) of the first UE 201. For example, referring to FIG. 4, the first IM server 220 may receive (401), from the first UE 201, the INVITE message indicating information about the supportable function of the first UE 201, device identification information of the first UE 201 , and device identification information of the second UE 202. According to an embodiment, the first IM server 220 may obtain the first chat invitation message transmitted from the first UE 201 using the RPC protocol. For example, the first UE 201 may transmit a first chat invitation message to the first SBC (e.g., the first SBC 240 of FIG. 2 ) using the session initiation protocol, and the first SBC 240 may transmit the received first chat invitation message to the first IM server 220 using the RPC protocol (e.g., gRPC protocol). According to an embodiment, based on obtaining the first chat invitation message, the first IM server 220 may transmit a RCS protocol-based response message (e.g., a 100 trying message, a 180 ringing message) to the first UE 201.

In operation 303, according to various embodiments, the first IM server 220 (e.g., the processor 120 of FIG. 1) may request information about a supportable function of the second UE 202 to an external database (e.g., the external database 230 of FIG. 2) through the communication module 190. For example, referring to FIG. 4, based on receiving (401) the INVITE message to establish a first chat session between the first UE 201 and the first IM server 220, the first IM server 220, may request (403) information (e.g., capability) about the supportable function of the second UE 202 from the external database 230 information.

According to an embodiment, the request transmitted from the first IM server 220 to the external database 230 may include the device identification information (e.g., at least one of tel URI or SIP URI) of the second UE 202. According to an embodiment, the external database 230 may search, using the device identification information of the second UE 202 obtained from the first IM server 220, information about the supportable function of the second UE 202, and may transmit the searched information to the first IM server 220. For example, the external database 230 may determine whether the device identification information of the second UE 202 included in the request transmitted from the first IM server 220 is included in a pre-stored table, identify the information about supportable function of the second UE 202 corresponding to the device identification information if the device identification information of the UE 202 is included in the pre-stored table, and transmit, to the first IM server 220, the information about supportable function of the second UE 202.

In operation 305, according to various embodiments, based on obtaining the information about the supportable function of the second UE 202 from the external database 230, the first IM server 220 (e.g., the processor 120 of FIG. 1) may transmit, to the first UE 201, a first acknowledgment message based on the RCS protocol, the first acknowledgment message being a message accepting establishment of the first chat session. According to an embodiment, the first acknowledgment message may include, as a chat session establishment acceptance message (e.g., 200 OK message) defined in the RCS protocol, at least one of the device identification information of the first UE 201 (e.g., at least one of tel URI or SIP URI), the device identification information of the second UE 202, or the information about supportable function of the second UE 202 (e.g., capability). For example, referring to FIG. 4, based on receiving (405), as the requested information, the information about the supportable function of the second UE (202) from the external database (230), the first IM server 220 may transmit (407) a 200 OK message indicating the information about the supportable function of the second UE 202, the device identification information of the second UE 202, and the device identification information of the first UE 201 to the first UE 201. The first IM server 220 may transmit the first acknowledgment message using the RPC protocol. For example, the first IM server 220 may transmit the first acknowledgment message to the first SBC 240 using an RPC protocol (e.g., gRPC protocol), and the first SBC 240 may transmit the first acknowledgment message to the first UE 201 using the session initiation protocol. Based on transmitting, by the first IM server 220, the first acknowledgment message to the first UE 201, the first chat session between the first UE 201 and the first IM server 220 may be established. After transmitting the first acknowledgment message, the first IM server 220 may obtain an ACK message for the first acknowledgment message from the first UE 201.

In operation 307, the first IM server 220 (e.g., the processor 120 of FIG. 1) may transmit, to the called-side device corresponding to the second UE 202 through the communication module 190, a second chat invitation message based on the RCS protocol, the second chat invitation message being a message requesting establishment of a second chat session for transferring a chat between the first UE 201 and the second UE 202. The second chat invitation message, as a chat session establishment request message (e.g., INVITE message) defined in the RCS protocol, may include at least one of device identification information (for example, at least one of tel URI or SIP URI) of the first UE 201, information about a supportable function of the first UE 201, or device identification information of the second UE 202. The second chat invitation message may be configured in the same format as at least a part of the first chat invitation message. According to an embodiment, the called-side device corresponding to the second UE 202 may mean (1) the second IM server 250 accessed by the second UE 202 if the operators (e.g., mobile communication network operators (MNOs)) of the first IM server 220 and the second IM server 250 are different, or may mean (2) the second UE 202 if the operators of the first IM server 220 and the second IM server 250 are the same. For example, referring to FIG. 4, the first IM server 220, to establish a second chat session between the first IM server 220 and the second IM server 250, may transmit (409), to the second IM server 250, an INVITE message indicating information about the supportable function of the first UE 201, the device identification information of the first UE 201, and the device identification information of the second UE 202.

Based on obtaining the information about the supportable function of the first UE 201 from the first IM server 220, the second IM server 250 may request the information about the supportable function of the second UE 202 from the external database 230. For example, referring to FIG. 4, based on receiving the INVITE message from the first IM server 220, the second IM server 250 may request (411), from the external database 230, the information on the supportable function of the second UE 202. The request may include the device identification information (e.g., at least one of tel URI or SIP URI) of the second UE 202. The external database 230 may identify, using the device identification information of the second UE 202 obtained from the first IM server 220, the information about the supportable function of the second UE 202, and may transmit the identified information to the first IM server 220. For example, referring to FIG. 4, the second IM server 250 may receive (413), as the requested information, the information on the supportable function of the second UE 202 from the external database 230. According to an embodiment, the second IM server 250 may identify the information on the supportable function of the second UE 202 previously stored in the second IM server 250, instead of receiving the information about the supportable function of the second UE 202 from the external database.

In operation 309, the first IM server 220 (e.g., the processor 120 of FIG. 1) may obtain, from the called-side device through the communication module 190, a second acknowledgment message based on the RCS protocol, the second acknowledgment message being a message accepting establishment of a second chat session. The first IM server 220 may obtain a second acknowledgment message from the called-side device in a state in which the first chat session is established. The second acknowledgment message may be configured in the same format as at least a part of the first acknowledgment message. According to an embodiment, the second acknowledgment message, as a chat session establishment acceptance message (e.g., 200 OK message) defined in the RCS protocol, may include at least one of device identification information (e.g., of tel URI or SIP URI) of the first UE 201, device identification information of the second UE 202, or the information about the supportable function of the second UE 202. For example, referring to FIG. 4, based on receiving (413) the information about the supportable function of the second UE 202 from the external database 230, the second IM server 250 may transmit, to the first IM server 220, the 200 OK message indicating information about the supportable function of 202, the device identification information of the second UE 202, and the device identification information of the first UE 201, and accordingly, the first IM server 220 may receive (415) the 200 OK message from the second IM server 250. Based on obtaining, by the first IM server 220, the second acknowledgment message from the called-side device (e.g., the second IM server 250), a second chat session may be established between the first IM server 220 and the called-side device. According to an embodiment, based on obtaining the second acknowledgment message, the first IM server 220 may transmit an ACK message for the second acknowledgment message to the called-side device. According to an embodiment, the second chat session may be established asynchronously after the first chat session is established.

The second IM server 250 may transmit, to the second UE 202, a third chat invitation message based on the RCS protocol, the third chat invitation message being a message requesting establishment of a third chat session for transmitting a chat between the first UE 201 and the second UE 202. The third chat invitation message, as a chat session establishment request message (e.g., INVITE message) defined in the RCS protocol, may include at least one of device identification information (e.g., at least one of tel URI or SIP URI) of the first UE 201, the information about the supportable function of the first UE 201, or the device identification information of the second UE 202. For example, referring to FIG. 4, the second IM server 250 may transmit, to the second UE 202, an INVITE message indicating the information about the supportable function of the first UE 201, the device identification information of the first UE 201, and the device identification information of the second UE 202. The third chat invitation message may be configured in the same format as at least a part of the first chat invitation message. The second IM server 250 may obtain, from the second UE 202, a third acknowledgment message based on the RCS protocol, the third acknowledgment message being a message accepting the establishment of the third chat session in a state in which the second chat session is established. The third acknowledgment message may, as a chat session establishment acceptance message (e.g., 200 OK message) defined in the RCS protocol, include at least one of the device identification information of the first UE 201 (e.g., at least one of tel URI or SIP URI), the device identification information of the second UE 202, or the information about the supportable function of the second UE 202. For example, referring to FIG. 4, the second IM server 250 may receive (419) the information about the supportable function of the second UE 202 from the second UE 202, the device identification information of the second UE 202, and a 200 OK message indicating the device identification information of the first UE 201. According to an embodiment, the third acknowledgment message may be configured in the same format as at least a part of the first acknowledgment message. Based on obtaining, by the second IM server 250, the third acknowledgment message from the second UE 202, a third chat session may be established between the second IM server 250 and the second UE 202. The third chat session may be established asynchronously after the first chat session and the second chat session are established.

In operation 311, the first IM server 220 (e.g., the processor 120 of FIG. 1) may transmit, using the first chat session and the second chat session, a message related to a chat provided from the first UE 201 and the called device to a counterpart device. According to an embodiment, the first IM server 220 may transmit, to the counterpart device through a message session relay protocol (MSRP), the message related to the chat provided from the first UE 201 and the called-side device, based on the first chat session and the second chat session. According to an embodiment, the first IM server 220 may transmit, to the called-side device, using the first chat session and the second chat session, a message related to a chat provided from the first UE 201. For example, referring to FIG. 4, the first IM server 220 may obtain a chat message from the first UE 201 through the first chat session between the first UE 201 and the first IM server 220, and may transmit the chat message to the second UE 202 through the second chat session between the first IM server 220 and the second IM server 250. According to an embodiment, the first IM server 220 may transmit, to the first UE 201, using the first chat session and the second chat session, a message related to a chat provided from the called-side device. For example, referring to FIG. 4, if the second UE 202 receives the chat message from the second IM server 250, the second UE 202 may transmit an ACK message to the second IM server 250, and the first IM server 220 may obtain the ACK message through the second chat session between the first IM server 220 and the second IM server 250, and transmit an ACK message to the first UE 201 through the first chat session between the first UE 201 and the first IM server 220. For another example, referring to FIG. 4, the first IM server 220 may transmit, to the second UE 202 through the first chat session and the second chat session, RCS protocol-based delivery report message and display report message provided from the second UE 202, and may transmit, to the second UE 202, the ACK message provided from the first UE 201.

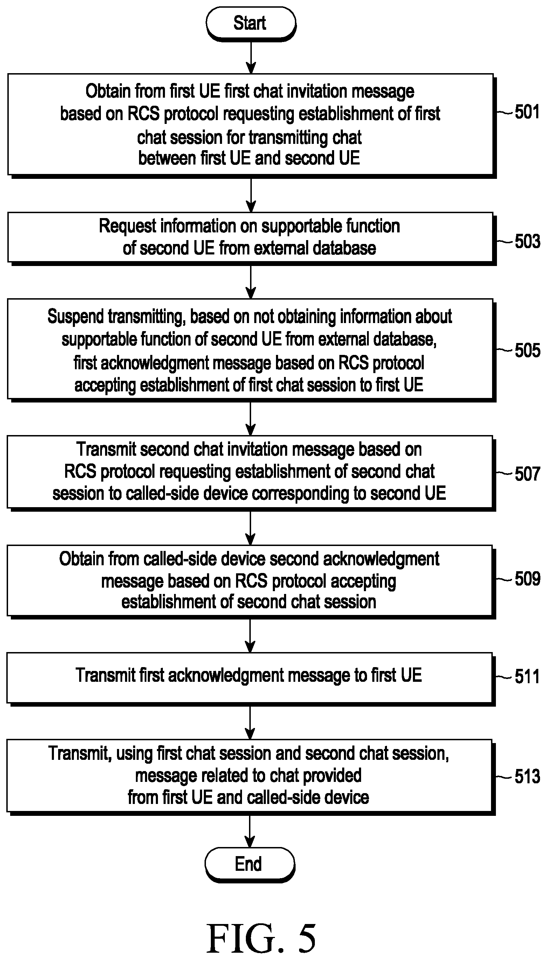

FIG. 5 is a flowchart illustrating an operation for synchronously establishing, by the first IM server (e.g., the first IM server 220 of FIG. 2), a session with the first UE (e.g., the first UE 201 of FIG. 2) and the second UE (e.g., the second UE 202 of FIG. 2), according to various embodiments.

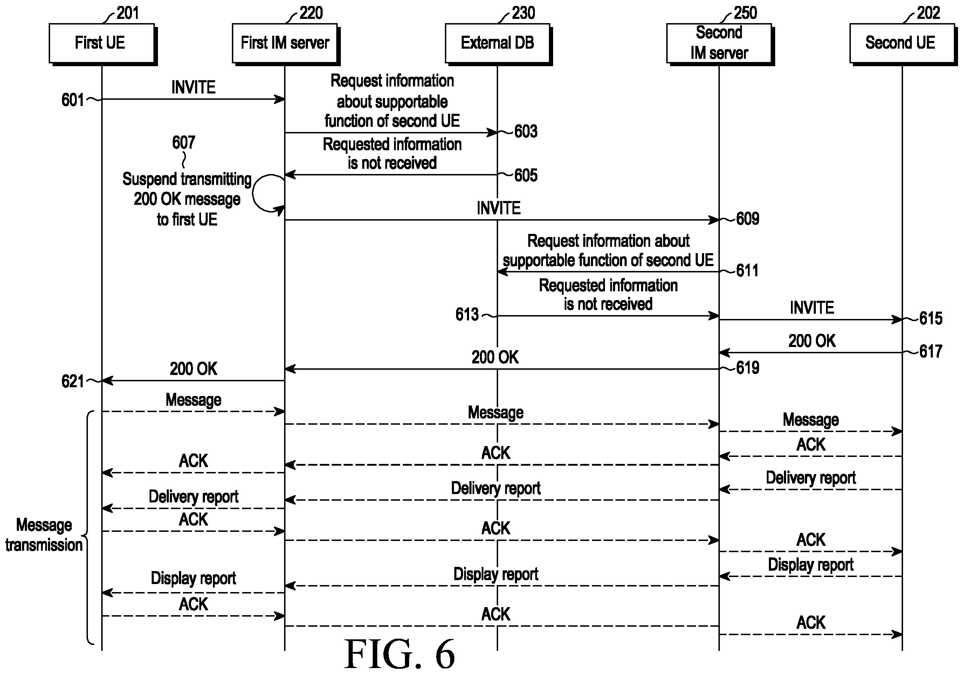

FIG. 6 is a sequence diagram illustrating an operation for synchronously establishing, by the first IM server 220, a session with the first UE 201 and the second UE 202, according to various embodiments.

In operation 501, according to various embodiments, the first IM server 220 (e.g., the processor 120 of FIG. 1) may obtain a first chat invitation message based on the RCS protocol from the first UE 201 through a communication module (e.g., communication module 190 in FIG. 1), the first chat invitation message being a message requesting establishment of a first chat session for transmitting a chat between the first UE 201 and the second UE 202. For example, referring to FIG. 6, the first IM server 220 may receive (601), from the first UE 201, an INVITE message indicating the information about the supportable function of the first UE 201, the device identification information of the first UE 201, and the device identification information of the second UE 202. According to various embodiments, the examples described in operation 301 of FIG. 3 may be applied correspondingly to operation 501.

In operation 503, the first IM server 220 (e.g., the processor 120 of FIG. 1) may request, from the external database (e.g., the external database 230 of FIG. 2) through the communication module 190, the information about the supportable function of the second UE 202. For example, referring to FIG. 6, based on receiving (601) the INVITE message from the first UE 201, the first IM server 220 may request (603), to the external database 230, the information about the supportable function of the second UE 202. According to various embodiments, the examples described in operation 303 of FIG. 3 may be applied correspondingly to operation 503.

In operation 505, based on the information about the supportable function of the second UE 202 not being obtained from the external database 230, the first IM server 220 (e.g., the processor 120 of FIG. 1) may suspend an operation of transmitting, to the first UE 201, a first acknowledgment message based on the RCS protocol, the first acknowledgment message being a message accepting establishment of a first chat session between the first UE 201 and the first IM server 220. The first IM server 220 may suspend an operation of transmitting the first acknowledgment message to the first UE 201 until a second acknowledgment message based on the RCS protocol is obtained from the called-side device corresponding to the second UE 202, the second acknowledgment message being a message accepting establishment of a second chat session for transmitting a chat between the first UE 201 and the second UE 202. For example, referring to FIG. 6, based on the requested information being not received (605) from the external database 230 (e.g., null information is received), the first IM server 220 may suspend (607) an operation of transmitting the 200 OK message to the first UE 201 until a 200 OK message is received from the second IM server 250.

In operation 507, the first IM server 220 (e.g., the processor 120 of FIG. 1) may transmit, to the called-side device corresponding to the second UE 202, a second chat invitation message based on the RCS protocol, the second chat invitation message being a message requesting establishment of a second chat session through the communication module 190. According to an embodiment, while the first IM server 220 suspends the operation of transmitting the first acknowledgment message to the first UE 201, the first IM server 220 may transmit the second chat invitation message to the called-side device. For example, referring to FIG. 6, the first IM server 220 may transmit (609) an INVITE message including the information about the supportable function of the first UE 201 to the second IM server 250. According to various embodiments, the examples described in operation 307 of FIG. 3 may be applied correspondingly to operation 507.

Based on obtaining the information about the supportable function of the first UE 201 from the first IM server 220, the second IM server 250 may request, from the external database 230, the information about supportable function of the second UE 202. For example, referring to FIG. 6, based on receiving the INVITE message from the first IM server 220, the second IM server 250 may request (611) the information about the supportable function of the second UE 202 from an external database 230. And then, the second IM server 250 may identify (613) that the information about the supportable function of the second UE 202, as the requested information, is not received from the external database 230 (e.g., receives null information). The second IM server 250 may transmit, to the second UE 202, a third chat invitation message based on the RCS protocol, the third chat invitation message being a message requesting establishment of a third chat session for transmitting a chat between the first UE 201 and the second UE 202. For example, referring to FIG. 6, the second IM server 250 may transmit (615), to the second UE 202, an INVITE message indicating the information about the supportable function of the first UE 201, the device identification information of the first UE 201, and the device identification information of the second UE 202. The second IM server 250 may receive a third acknowledgment message based on the RCS protocol, the third acknowledgment message being a message for accepting the establishment of the third chat session from the second UE 202. For example, referring to FIG. 6, the second IM server 250 may receive (617), from the second UE 202, a 200 OK message indicating the information about the supportable function of the second UE 202, the device identification information of the second UE 202 , and the device identification information of the first UE 201. Based on obtaining, by the second IM server 250, the third acknowledgment message from the second UE 202, the third chat session may be established between the second IM server 250 and the second UE 202.

In operation 509, according to various embodiments, the first IM server 220 (e.g., the processor 120 of FIG. 1) may obtain, from the called-side device, the second acknowledgment message based on the RCS protocol, the second acknowledgment message being a message accepting the establishment of the second chat session through the communication module 190. For example, referring to FIG. 6, based on receiving (617) the 200 OK message from the second UE 202, the second IM server 250 may transmit, to the first IM server 220, a 200 OK message indicating the information about the supportable function of the second UE 202, the device identification information of the second UE 202, and the device identification information of the first UE 201. Accordingly, the first IM server 220 may receive (619) the 200 OK message from the second IM server 250. According to an embodiment, based on obtaining, by the first IM server 220, the second acknowledgment message from the second IM server 250, a second chat session may be established between the first IM server 220 and the second IM server 250.

According to an embodiment, if the third acknowledgment message is not obtained from the second UE 202 within a predetermined time (e.g., 30 seconds) after transmitting the third chat invitation message to the second UE 202, the second IM server 250 may transmit, to the first IM server 220, a second acknowledgment message indicating information about a predetermined function (e.g., a supportable default function of the second UE 202), the device identification information of the second UE 202, and the device identification information of the first UE 201. Accordingly, the first IM server 220 may receive the 200 OK message from the second IM server 250.

In operation 511, according to various embodiments, the first IM server 220 (e.g., the processor 120 of FIG. 1) may transmit the first acknowledgment message to the first UE 201 through the communication module 190. For example, referring to FIG. 6, the first IM server 220 may transmit (621), to the first UE 201, a 200 OK message indicating the information about the supportable function of the second UE 202, the device identification information of the second UE 202, and the device identification information of the first UE 201. According to an embodiment, while the operation of transmitting the first acknowledgment message to the first UE 201 is suspended, the first IM server 220 may release the suspension of the transmission operation of the first acknowledgment message based on obtaining the second acknowledgment message from the second IM server 250, and transmit a first acknowledgment message to the first UE 201 through the communication module 190. According to an embodiment, based on transmitting, by the first IM server 220, the first acknowledgment message to the first UE 201, a first chat session may be established between the first IM server 220 and the first UE 201.

In operation 513, according to various embodiments, the first IM server 220 (e.g., the processor 120 of FIG. 1) may transmit, using the first chat session and the second chat session, to a counterpart device, a message related to a chat provided from the first UE 201 and the called-side device. According to various embodiments, the examples described in operation 311 of FIG. 3 may be applied correspondingly to operation 513.

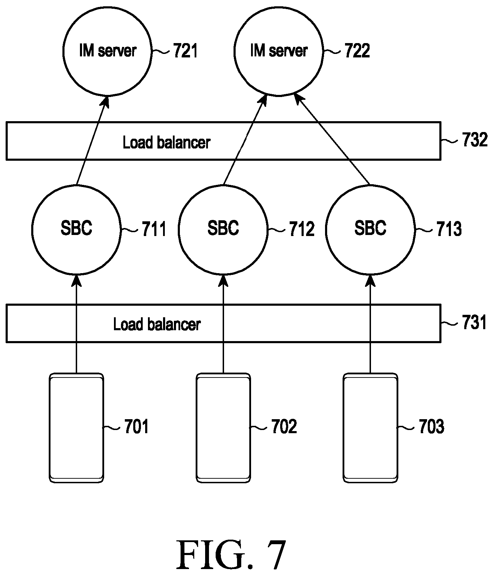

FIG. 7 is a diagram illustrating a message transmitted/received between a UE and an SBC and a message transmitted/received between the SBC and an IM server, according to various embodiments.

According to various embodiments, SBCs 711, 712, and 713 (e.g., SBCs 240 and 270 of FIG. 2) may transmit, to the IM servers 721 and 722 (e.g., IM servers 220 and 250), a message received from an UE 701, 702, and 703 (e.g., the UE 201 and 202 in FIG. 2), and transmit a message received from the IM server 721 and 722 to the UE 701, 702, and 703. According to an embodiment, a message transmitted from the UE 701 , 702, 703 to the SBC 711 , 712 , 713 may be distributed to the SBC 711 , 712 , 713 through a load balancer 731, and may be transmitted in TCP (transmission control protocol) format using SIP (session initiation protocol). According to an embodiment, a message transmitted from the SBC 711 , 712, and 713 to the IM server 721 and 722 may be distributed to the IM server 721 and 722 through the load balancer 732 , and may be transmitted in a TCP format using the HTTP2.0-based RPC (remote procedure call) protocol (e.g., gRPC protocol). According to an embodiment, the load balancer 731 and 732 may perform load balancing of TCP packets, and may perform the operation of distributing the request message to a device (e.g., SBC or IM server) to process the received request message (e.g. INVITE message).

In a cast that the IM servers 721 and 722 transmits and receives a message in UDP (user datagram protocol) format with the SBCs 711, 712, 713 using the session initiation protocol (SIP), since the IM server 721, 722 and the SBC 711, 712, 713 operate by one-to-one mapping, the SBC and the IM server must be expanded together if a traffic of the SBC 711, 712, and 713 or a traffic of the IM server 721 and 722 increases. However, according to various embodiments of the present disclosure, in a case that the IM server 721 and 722 transmits and receives a message in the TCP format with the SBC 711, 712, and 713 using the RPC protocol, since the above-described structural limitation does not occur, it is possible to efficiently manage the traffic generated by the SBC 711, 712, and 713 or the IM server 721 and 722 through the load balancer 732, and if the traffic of the IM server 721, 722 increases, it is possible to solve the above traffic by additionally increasing only the IM server without the need to increase the IM server.

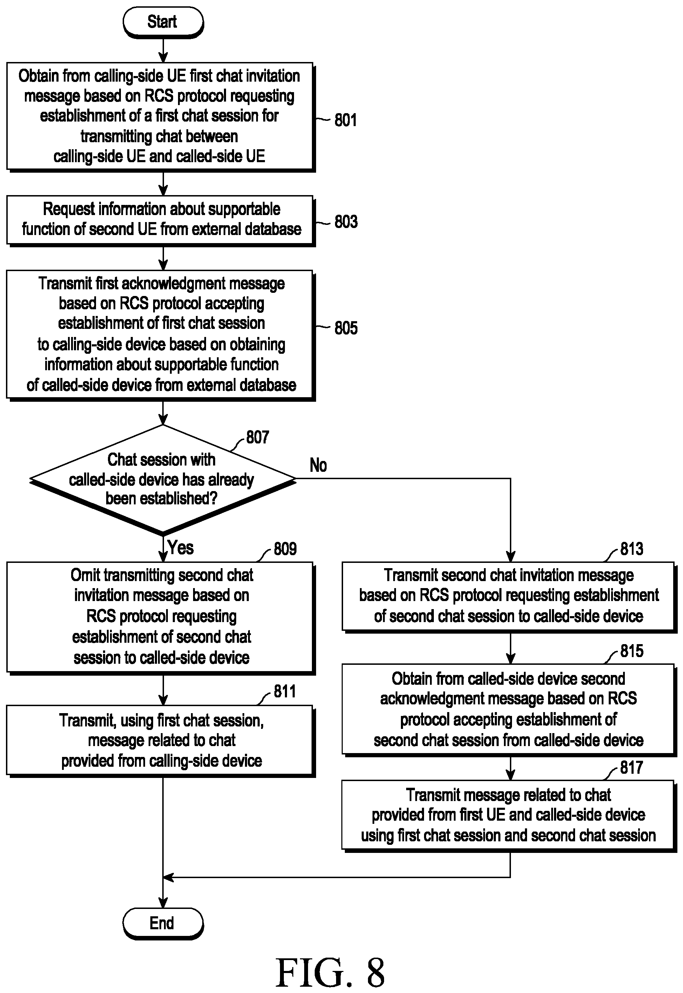

FIG. 8 is a flow chart illustrating an operation for supporting, by the first IM server (e.g., the first IM server 220 of FIG. 2), a self chat function (also referred as "chat yourself function") of the first UE (e.g., the first UE 201 of FIG. 2) or asynchronously establishing a session with the first UE 201 and the second UE (e.g., the first UE 202 of FIG. 2), according to various embodiments.

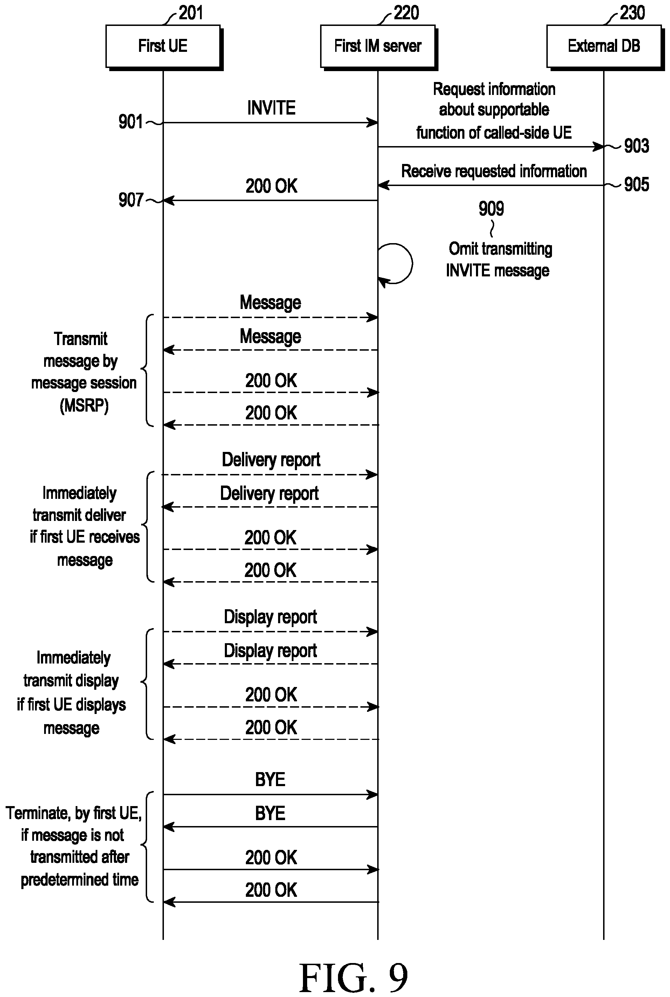

FIG. 9 is a sequence diagram illustrating an operation for supporting, by the first IM server 220, the self chat function of the first UE 201, according to various embodiments.

In operation 801, according to various embodiments, the first IM server 220 (e.g., the processor 120 of FIG. 1) may obtain, from the calling-side device, a first chat invitation message based on RCS protocol, the first chat invitation message being a message for requesting establishment of a first chat session for transmitting a chat between a calling-side device and a called device-side through a communication module (e.g., communication module 190 in FIG. 1). According to an embodiment, the first chat invitation message may include device identification information (e.g., at least one of tel URI or SIP URI) of the called-side device. According to an embodiment, the first chat invitation message, as a chat session establishment request message (e.g., INVITE message) defined in the RCS protocol, may include the device identification information (e.g., at least one of tel URI or SIP URI) of the calling-side device and/or the information about supportable function (e.g., capability). For example, referring to FIG. 9 , the first IM server 220 may receive an INVITE message indicating information about a supportable function of the first UE 201 from the first UE 201, device identification information of the first UE 201, and a device identification information of the second UE 202. According to an embodiment, the calling-side device and the called-side device may be the same as the first UE (e.g., the first UE 201 in FIG. 2), and in this case, the chat between the calling-side device and the called-side device may mean the self chat function. According to an embodiment, the first IM server 220 transmits an RCS protocol-based response message (e.g., a 100 trying message or a 180 ringing message) to the first UE 201, based on obtaining the first chat invitation message. According to various embodiments, the examples described in operation 301 of FIG. 3 may be applied correspondingly to operation 801.

In operation 803, according to various embodiments, the first IM server 220 (e.g., the processor 120 of FIG. 1) may request information about the supportable function of the called-side device from an external database (e.g., the external database 230 of FIG. 2) through the communication module 190. For example, referring to FIG. 9, based on receiving (901) the INVITE message, the first IM server 220 may request (903) the information about the supportable function (903) of external database 230 from the called-side device (e.g., the first UE 201 or the second UE 202). The request may include device identification information (e.g., at least one of a tel URI or a SIP URI) of the called-side device. According to an embodiment, the external database 230, using the device identification information of the called-side device obtained from the first IM server 220, identify the information about the supportable function of the called-side device, and transmit the identified information to the first IM server 220.

In operation 805 , according to various embodiments, based on obtaining the information about the supportable function of the called-side device from the external database 230, the first IM server 220 (e.g., the processor 120 of FIG. 1) may transmit a first acknowledgment message based on the RCS protocol, the first acknowledgment message being a message accepting establishment of the first chat session to the calling-side device. According to an embodiment, the first acknowledgment message, as a chat session establishment acceptance message defined in the RCS protocol (e.g. 200 OK message), may include at least one of the device identification information of the calling-side device (e.g., at least one of tel URI or SIP URI), the device identification information of the called-side device, or the information about the supportable function of the called-side device. For example, referring to FIG. 9, based on receiving (905) the information about the supportable function of the called-side device (e.g., the first UE 201 or the second UE 202) from the external database 230, the first IM server 220 may transmit (907) a 200 OK message indicating the information about the supportable function of the called-side device to the first UE 201, the device identification information of the called-side device, and the device identification information of the calling-side device. According to an embodiment, based on transmitting, by the first IM server 220, the first acknowledgment message to the first UE 201, a first chat session may be established between the first UE 201 and the first IM server 220. According to various embodiments, the examples described in operation 305 of FIG. 3 may be applied correspondingly to operation 805.

In operation 807, according to various embodiments, the first IM server 220 (e.g., the processor 120 of FIG. 1) may determine whether a chat session with the called-side device has already been established. For example, if the calling-side device and the called-side device are the same as the first UE 201, based on transmitting the first acknowledgment message to the first UE 201, the first IM server 220 may identify that a first chat session is established between the IM server 220 and the called-side device. As another example, if the calling-side device and the called-side device are different from each other such as the calling-side device is the first UE 201 and the called-side device is the second UE 202, based on receiving the acknowledgment message (e.g., 200 OK message) from the called-side device, the first IM server 220 may identify that a chat session is established between the first IM server 220 and the called-side device.

In operation 809, according to various embodiments, the first IM server 220 (e.g., the processor 120 of FIG. 1 ) may omit an operation of transmitting to the called-side device the second chat invitation message based on the RCS protocol, the second chat invitation message being a message requesting establishment of the second chat session. According to an embodiment, based on identifying that a chat session with the called-side device has already been established (operation 807-Yes), the first IM server 220 may omit an operation of transmitting to the called-side device a second chat invitation message based on the RCS protocol, the second chat invitation message being a message requesting establishment of the second chat session. For example, referring to FIG. 9, if the calling-side device and the called-side device are the same as the first UE 201, based on identifying that a first chat session with the first UE 201 has already been established, the first IM server 220 may omit (909) an operation of transmitting a second chat invitation message based on the RCS protocol, the second chat invitation message being a message requesting establishment of the second chat session to the first UE 201.

**In** operation 811, according to various embodiments, the first IM server 220 (e.g., the processor 120 of FIG. 1) may transmit a message related to a chat provided from the calling-side device using the first chat session. According to an embodiment, the first IM server 220 may transmit, to the called-side device, through a message session relay protocol (MSRP), based on the first chat session, a message related to a chat provided from the calling-side device. For example, referring to FIG. 9, the first IM server 220 may receive a chat message from the first UE 201 through the first chat session between the first UE 201 and the first IM server 220, and in response to obtaining the chat message, transmit the chat message to the first UE 201 through the first chat session. For another example, referring to FIG. 9, the first IM server 220 may receive, from first UE 201 through the first chat session, an ACK message for a chat message, a delivery report message, an ACK message for a delivery report message, a display report message, and an ACK message for a display report message, and may transmit the obtained messages to the first UE 201 through the first chat session. According to an embodiment, based on not obtaining a chat-related message for a predetermined time, the calling-side device may transmit a chat session termination request message to the first IM server 220, and the first IM server 220 may transmit the chat session termination request message to the called-side device. For example, referring to FIG. 9, based on obtaining the BYE message from the first UE 201, the first IM server 220 may transmit the BYE message to the first UE 201. According to an embodiment, based on obtaining the chat session termination acceptance message from the called-side device, the first IM server 220 may transmit the chat session termination acceptance message to the calling-side device. For example, referring to FIG. 9, based on obtaining a 200 OK message from the first UE 201 the first IM server 220 may terminate the established chat session by transmitting the 200 OK message to the first UE 201.

In operation 813, according to various embodiments, the first IM server 220 (e.g., the processor 120 of FIG. 1 ) may transmit, through the communication module 190, the second chat invitation message based on the RCS protocol to the called-side device, the second chat invitation message being a message requesting establishment of the second chat session. According to an embodiment, based on identifying that the chat session with the called-side device is not established (operation 807 - No), the first IM server 220 may transmit, through the communication module 190, a second chat invitation message based on the RCS protocol requesting establishment of a second chat session to the called-side device. According to various embodiments, the examples described in operation 307 of FIG. 3 may be applied correspondingly to operation 813.

In operation 815, according to various embodiments, the first IM server 220 (e.g., the processor 120 of FIG. 1) may obtain through the communication module 190 a second acknowledgment message based on the RCS protocol accepting establishment of the second chat session from the called-side device. According to various embodiments, the examples described in operation 309 of FIG. 3 may be applied correspondingly to operation 815.

In operation 817, according to various embodiments, the first IM server 220 (e.g., the processor 120 of FIG. 1 ) may transmit, using the first chat session and the second chat session, a message related to a chat provided from the first UE 201 and the called-side device to a counterpart device. According to various embodiments, the examples described in operation 311 of FIG. 3 may be applied correspondingly to operation 817.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first instant messaging, IM, server (220) comprising:
communication module (190);
at least one processor (120); and
memory (130) storing instructions that, when executed by the at least one processor (120) individually or collectively, cause the first IM server (220) to:
based on obtaining (401), from a first electronic device (201), a first chat invitation message based on a rich communication suite, RCS, protocol, and requesting establishment of a first chat session for transmitting a chat between the first electronic device (201) and a second electronic device (202), request (403) information about a supportable function of the second electronic device (202) from an external database (230) through the communication module (190),
based on obtaining (405) the information about the supportable function from the external database (230):
transmit (407), to the first electronic device (201) through the communication module (190), a first acknowledgment message based on the RCS protocol to establish the first chat session with the first electronic device (201),
transmit (409), to a second IM server (250) through the communication module (190), a second chat invitation message based on the RCS protocol and requesting establishment of a second chat session for transmitting a chat, and
obtain (415), from the second IM server (250) through the communication module (190), a second acknowledgment message based on the RCS protocol to establish the second chat session with the second IM server (250), wherein based on obtaining (419), by the second IM server (250) from the second electronic device (202), a third acknowledgment message based on the RCS protocol after transmitting (417), by the second IM server (250) to the second electronic device (202), a third chat invitation message based on the RCS protocol and requesting establishment of a third chat session for transmitting a chat, the third chat session between the second IM server (250) and the second electronic device (202) is established, and
based on the information about the supportable function being not obtained (605) from the external database (230):
suspend (607) transmitting the first acknowledgment message to the first electronic device (201) until the second acknowledgment message is obtained from the second IM server (250),
transmit (609), to the second IM server (250) through the communication module (190), the second chat invitation message, wherein based on obtaining (617), by the second IM server (250) from the second electronic device (202) after the second IM server (250) transmits (615) the third chat invitation message to the second electronic device (202), the third chat session between the second IM server (250) and the second electronic device (202) is established,
obtain (619), from the second IM server (250) through the communication module (190), the second acknowledgment message to establish the second chat session with the second IM server (250), and
transmit (621), to the first electronic device (201) through the communication module (190), the first acknowledgment message to establish the first chat session with the first electronic device (201).

2. The first IM server (220) of claim 1, where the instructions that, when executed by the at least one processor (120) individually or collectively, cause the first IM server (220) to:
transmit a message related to a chat provided from the first electronic device (201) to the second electronic device (202) using the first chat session, the second chat session, and the third chat session.

3. The first IM server (220) of claim 1,
wherein the first chat invitation message, the second chat invitation message, and the third chat invitation message as INVITE messages according to the RCS protocol, include information about a supportable function of the first electronic device (201).

4. The first IM server (220) of claim 1,
wherein the first acknowledgment message, the second acknowledgment message, and the third acknowledgment message as 200 OK messages according to the RCS protocol, include information about the supportable function of the second electronic device (202).

5. The first IM server (220) of claim 1,
wherein the instructions, when executed by the at least one processor (120) individually or collectively, further cause the first IM server (220) to:
determine (807) whether the first electronic device (201) and the second electronic device (202) are the same, and
omit (809, 909) transmitting the second chat invitation message based on identifying that the first electronic device (201) and the second electronic device (202) are the same.

6. The first IM server (220) of claim 5,
wherein the instructions, when executed by the at least one processor (120) individually or collectively, cause the first IM server (220) to:
based on obtaining a message related to a chat from the first electronic device (201), transmit, using the first chat session, the message related to the chat to the first electronic device (201).

7. A method of a first IM server (220) comprising a communication module (190) and at least one processor (120), comprising:
based on obtaining (401), from a first electronic device (201), a first chat invitation message based on a rich communication suite, RCS, protocol, and requesting establishment of a first chat session for transmitting a chat between the first electronic device (201) and a second electronic device (202), requesting (403) information about a supportable function of the second electronic device (202) from an external database (230) through the communication module (190);
based on obtaining the information about the supportable function from the external database (230):
transmitting (407), to the first electronic device (201) through the communication module (190), a first acknowledgment message based on the RCS protocol to establish the first chat session with the first electronic device (201);
transmitting, to a second IM server (250) through the communication circuitry (190), a second chat invitation message based on the RCS protocol and requesting establishment of a second chat session for transmitting a chat; and
obtaining, from the second IM server (250) through the communication module (190), a second acknowledgment message based on the RCS protocol to establish the second chat session with the second IM server (250), wherein based on obtaining (419), by the second IM server (250) from the second electronic device (202), a third acknowledgment message based on the RCS protocol after transmitting (417), by the second IM server (250) to the second electronic device (202), a third chat invitation message based on the RCS protocol and requesting establishment of a third chat session for transmitting a chat, the third chat session between the second IM server (250) and the second electronic device (202) is established; and
based on the information about the supportable function being not obtained (605) from the external database (230):
suspending (607) transmitting the first acknowledgment message to the first electronic device (201) until the second acknowledgment message is obtained from the second IM server (250);
transmitting (609), to the second IM server (250) through the communication module (190), the second chat invitation message, wherein based on obtaining (617), by the second IM server (250) from the second electronic device (202) after the second IM server (250) transmits (615) the third chat invitation message to the second electronic device (202), the third chat session between the second IM server (250) and the second electronic device (202) is established;
obtaining (619), from the second IM server (250) through the communication module (190), the second acknowledgment message to establish the second chat session with the second IM server (250); and
transmitting (621), to the first electronic device (201) through the communication module (190), the first acknowledgment message to establish the first chat session with the first electronic device (201).

8. The method of claim 7,
wherein the method further comprises transmitting a message related to a chat provided from the first electronic device (201) to the second electronic device (202) using the first chat session, the second chat session, and the third chat session.

9. The method of claim 7,
wherein the first chat invitation message, the second chat invitation message, and the third chat invitation message as INVITE messages according to the RCS protocol, include information about a supportable function of the first electronic device (201).

10. The method of claim 9, further comprising:
determining whether the first electronic device (201) and the second electronic device (202) are a same; and
omitting (809, 909) transmitting the second chat invitation message to the called-side device based on identifying that the first electronic device (201) and the second electronic device (202) are the same.

11. The method of claim 10, further comprising:
based on obtaining a message related to a chat from the first electronic device (201), transmitting, using the first chat session, the message related to the chat to the first electronic device (201).

## Patentansprüche

1. Erster Instant-Messaging-Server, IM-Server (220), umfassend:
ein Kommunikationsmodul (190);
mindestens einen Prozessor (120); und
einen Speicher (130), der Anweisungen speichert, die, wenn sie durch den mindestens einen Prozessor (120) einzeln oder kollektiv ausgeführt werden, den ersten IM-Server (220) zu Folgendem veranlassen:
basierend auf einem Erhalten (401) einer ersten Chat-Einladungsnachricht von einer ersten elektronischen Vorrichtung (201), die auf einem Rich-Communication-Suite-Protokoll, RCS-Protokoll basiert und die Einrichtung einer ersten Chat-Sitzung zum Übertragen eines Chats zwischen der ersten elektronischen Vorrichtung (201) und einer zweiten elektronischen Vorrichtung (202) anfordert, Anfordern (403) von Informationen über eine unterstützbare Funktion der zweiten elektronischen Vorrichtung (202) von einer externen Datenbank (230) über das Kommunikationsmodul (190),
basierend auf einem Erhalten (405) der Informationen über die unterstützbare Funktion von der externen Datenbank (230):
Übertragen (407) einer ersten Bestätigungsnachricht basierend auf dem RCS-Protokoll an die erste elektronische Vorrichtung (201) über das Kommunikationsmodul (190), um die erste Chat-Sitzung mit der ersten elektronischen Vorrichtung (201) einzurichten,
Übertragen (409) einer zweiten Chat-Einladungsnachricht an einen zweiten IM-Server (250) über das Kommunikationsmodul (190), die auf dem RCS-Protokoll basiert und die Einrichtung einer zweiten Chat-Sitzung zum Übertragen eines Chats anfordert, und
Erhalten (415) einer zweiten Bestätigungsnachricht von dem zweiten IM-Server (250) über das Kommunikationsmodul (190) basierend auf dem RCS-Protokoll, um die zweite Chat-Sitzung mit dem zweiten IM-Server (250) einzurichten, wobei basierend auf einem Erhalten (419) einer dritten Bestätigungsnachricht durch den zweiten IM-Server (250) von der zweiten elektronischen Vorrichtung (202) basierend auf dem RCS-Protokoll nach einem Übertragen (417) einer dritten Chat-Einladungsnachricht durch den zweiten IM-Server (250) an die zweite elektronische Vorrichtung (202), die auf dem RCS-Protokoll basiert und die Einrichtung einer dritten Chat-Sitzung zum Übertragen eines Chats anfordert, die dritte Chat-Sitzung zwischen dem zweiten IM-Server (250) und der zweiten elektronischen Vorrichtung (202) eingerichtet wird, und
basierend darauf, dass die Informationen über die unterstützbare Funktion nicht von der externen Datenbank (230) erhalten werden (605):
Aussetzen (607) eines Übertragens der ersten Bestätigungsnachricht an die erste elektronische Vorrichtung (201), bis die zweite Bestätigungsnachricht von dem zweiten IM-Server (250) erhalten wird,
Übertragen (609) der zweiten Chat-Einladungsnachricht an den zweiten IM-Server (250) über das Kommunikationsmodul (190), wobei basierend auf einem Erhalten (617) durch den zweiten IM-Server (250) von der zweiten elektronischen Vorrichtung (202), nachdem der zweite IM-Server (250) die dritte Chat-Einladungsnachricht an die zweite elektronische Vorrichtung (202) überträgt (615), die dritte Chat-Sitzung zwischen dem zweiten IM-Server (250) und der zweiten elektronischen Vorrichtung (202) eingerichtet wird,
Erhalten (619) der zweiten Bestätigungsnachricht von dem zweiten IM-Server (250) über das Kommunikationsmodul (190), um die zweite Chat-Sitzung mit dem zweiten IM-Server (250) einzurichten, und
Übertragen (621) der ersten Bestätigungsnachricht an die erste elektronische Vorrichtung (201) über das Kommunikationsmodul (190), um die erste Chat-Sitzung mit der ersten elektronischen Vorrichtung (201) einzurichten.

2. Erster IM-Server (220) nach Anspruch 1, wobei die Anweisungen, die, wenn sie durch den mindestens einen Prozessor (120) einzeln oder kollektiv ausgeführt werden, den ersten IM-Server (220) zu Folgendem veranlassen:
Übertragen einer Nachricht in Bezug auf einen Chat, der von der ersten elektronischen Vorrichtung (201) bereitgestellt wird, an die zweite elektronische Vorrichtung (202) unter Verwendung der ersten Chat-Sitzung, der zweiten Chat-Sitzung und der dritten Chat-Sitzung.

3. Erster IM-Server (220) nach Anspruch 1,
wobei die erste Chat-Einladungsnachricht, die zweite Chat-Einladungsnachricht und die dritte Chat-Einladungsnachricht als INVITE-Nachrichten gemäß dem RCS-Protokoll Informationen über eine unterstützbare Funktion der ersten elektronischen Vorrichtung (201) enthalten.

4. Erster IM-Server (220) nach Anspruch 1,
wobei die erste Bestätigungsnachricht, die zweite Bestätigungsnachricht und die dritte Bestätigungsnachricht als 200-OK-Nachrichten gemäß dem RCS-Protokoll Informationen über die unterstützbare Funktion der zweiten elektronischen Vorrichtung (202) enthalten.

5. Erster IM-Server (220) nach Anspruch 1,
wobei die Anweisungen, wenn sie durch den mindestens einen Prozessor (120) einzeln oder kollektiv ausgeführt werden, den ersten IM-Server (220) ferner zu Folgendem veranlassen:
Bestimmen (807), ob die erste elektronische Vorrichtung (201) und die zweite elektronische Vorrichtung (202) gleich sind, und
Auslassen (809, 909) eines Übertragens der zweiten Chat-Einladungsnachricht basierend auf einem Identifizieren, dass die erste elektronische Vorrichtung (201) und die zweite elektronische Vorrichtung (202) gleich sind.

6. Erster IM-Server (220) nach Anspruch 5,
wobei die Anweisungen, wenn sie durch den mindestens einen Prozessor (120) einzeln oder kollektiv ausgeführt werden, den ersten IM-Server (220) zu Folgendem veranlassen:
basierend auf einem Erhalten einer Nachricht in Bezug auf einen Chat von der ersten elektronischen Vorrichtung (201), Übertragen der Nachricht in Bezug auf den Chat an die erste elektronische Vorrichtung (201) unter Verwendung der ersten Chat-Sitzung.

7. Verfahren eines ersten IM-Servers (220), der ein Kommunikationsmodul (190) und mindestens einen Prozessor (120) umfasst, umfassend:
basierend auf einem Erhalten (401) einer ersten Chat-Einladungsnachricht von einer ersten elektronischen Vorrichtung (201), die auf einem Rich-Communication-Suite-Protokoll, RCS-Protokoll, basiert und die Einrichtung einer ersten Chat-Sitzung zum Übertragen eines Chats zwischen der ersten elektronischen Vorrichtung (201) und einer zweiten elektronischen Vorrichtung (202) anfordert, Anfordern (403) von Informationen über eine unterstützbare Funktion der zweiten elektronischen Vorrichtung (202) von einer externen Datenbank (230) über das Kommunikationsmodul (190);
basierend auf einem Erhalten der Informationen über die unterstützbare Funktion von der externen Datenbank (230):
Übertragen (407) einer ersten Bestätigungsnachricht basierend auf dem RCS-Protokoll an die erste elektronische Vorrichtung (201) über das Kommunikationsmodul (190), um die erste Chat-Sitzung mit der ersten elektronischen Vorrichtung (201) einzurichten;
Übertragen einer zweiten Chat-Einladungsnachricht an einen zweiten IM-Server (250) über die Kommunikationsschaltung (190), die auf dem RCS-Protokoll basiert und die Einrichtung einer zweiten Chat-Sitzung zum Übertragen eines Chats anfordert; und
Erhalten einer zweiten Bestätigungsnachricht von dem zweiten IM-Server (250) über das Kommunikationsmodul (190) basierend auf dem RCS-Protokoll, um die zweite Chat-Sitzung mit dem zweiten IM-Server (250) einzurichten, wobei basierend auf einem Erhalten (419) einer dritten Bestätigungsnachricht durch den zweiten IM-Server (250) von der zweiten elektronischen Vorrichtung (202) basierend auf dem RCS-Protokoll nach einem Übertragen (417) einer dritten Chat-Einladungsnachricht durch den zweiten IM-Server (250) an die zweite elektronische Vorrichtung (202), die auf dem RCS-Protokoll basiert und die Einrichtung einer dritten Chat-Sitzung zum Übertragen eines Chats anfordert, die dritte Chat-Sitzung zwischen dem zweiten IM-Server (250) und der zweiten elektronischen Vorrichtung (202) eingerichtet wird; und
basierend darauf, dass die Informationen über die unterstützbare Funktion nicht von der externen Datenbank (230) erhalten werden (605):
Aussetzen (607) eines Übertragens der ersten Bestätigungsnachricht an die erste elektronische Vorrichtung (201), bis die zweite Bestätigungsnachricht von dem zweiten IM-Server (250) erhalten wird;
Übertragen (609) der zweiten Chat-Einladungsnachricht an den zweiten IM-Server (250) über das Kommunikationsmodul (190), wobei basierend auf einem Erhalten (617) durch den zweiten IM-Server (250) von der zweiten elektronischen Vorrichtung (202), nachdem der zweite IM-Server (250) die dritte Chat-Einladungsnachricht an die zweite elektronische Vorrichtung (202) überträgt (615), die dritte Chat-Sitzung zwischen dem zweiten IM-Server (250) und der zweiten elektronischen Vorrichtung (202) eingerichtet wird;
Erhalten (619) der zweiten Bestätigungsnachricht von dem zweiten IM-Server (250) über das Kommunikationsmodul (190), um die zweite Chat-Sitzung mit dem zweiten IM-Server (250) einzurichten; und
Übertragen (621) der ersten Bestätigungsnachricht an die erste elektronische Vorrichtung (201) über das Kommunikationsmodul (190), um die erste Chat-Sitzung mit der ersten elektronischen Vorrichtung (201) einzurichten.

8. Verfahren nach Anspruch 7,
wobei das Verfahren ferner Übertragen einer Nachricht in Bezug auf einen Chat, der von der ersten elektronischen Vorrichtung (201) bereitgestellt wird, an die zweite elektronische Vorrichtung (202) unter Verwendung der ersten Chat-Sitzung, der zweiten Chat-Sitzung und der dritten Chat-Sitzung umfasst.

9. Verfahren nach Anspruch 7,
wobei die erste Chat-Einladungsnachricht, die zweite Chat-Einladungsnachricht und die dritte Chat-Einladungsnachricht als INVITE-Nachrichten gemäß dem RCS-Protokoll Informationen über eine unterstützbare Funktion der ersten elektronischen Vorrichtung (201) enthalten.

10. Verfahren nach Anspruch 9, ferner umfassend:
Bestimmen, ob die erste elektronische Vorrichtung (201) und die zweite elektronische Vorrichtung (202) gleich sind; und
Auslassen (809, 909) eines Übertragens der zweiten Chat-Einladungsnachricht an die Vorrichtung auf der gerufenen Seite basierend auf einem Identifizieren, dass die erste elektronische Vorrichtung (201) und die zweite elektronische Vorrichtung (202) gleich sind.

11. Verfahren nach Anspruch 10, ferner umfassend:
basierend auf einem Erhalten einer Nachricht in Bezug auf einen Chat von der ersten elektronischen Vorrichtung (201), Übertragen der Nachricht in Bezug auf den Chat an die erste elektronische Vorrichtung (201) unter Verwendung der ersten Chat-Sitzung.

## Revendications

1. Premier serveur de messagerie instantanée, IM, (220) comprenant :
un module de communication (190) ;
au moins un processeur (120) ; et
une mémoire (130) stockant des instructions qui, lorsqu'elles sont exécutées par l'au moins un processeur (120) individuellement ou collectivement, amènent le premier serveur IM (220) à :
sur la base de l'obtention (401), à partir d'un premier dispositif électronique (201), d'un premier message d'invitation au chat basé sur un protocole de suite de communication riche, RCS, et demandant l'établissement d'une première session de chat pour transmettre un chat entre le premier dispositif électronique (201) et un second dispositif électronique (202), demander (403) des informations sur une fonction pouvant être prise en charge du second dispositif électronique (202) à partir d'une base de données externe (230) au travers du module de communication (190),
sur la base de l'obtention (405) des informations sur la fonction pouvant être prise en charge à partir de la base de données externe (230) :
transmettre (407), au premier dispositif électronique (201) au travers du module de communication (190), un premier message d'accusé de réception basé sur le protocole RCS pour établir la première session de chat avec le premier dispositif électronique (201),
transmettre (409), à un second serveur IM (250) au travers du module de communication (190), un deuxième message d'invitation au chat basé sur le protocole RCS et demandant l'établissement d'une deuxième session de chat pour transmettre un chat, et
obtenir (415), à partir du second serveur IM (250) au travers du module de communication (190), un deuxième message d'accusé de réception basé sur le protocole RCS pour établir la deuxième session de chat avec le second serveur IM (250), dans lequel sur la base de l'obtention (419), par le second serveur IM (250) à partir du second dispositif électronique (202), d'un troisième message d'accusé de réception basé sur le protocole RCS après transmission (417), par le second serveur IM (250) au second dispositif électronique (202), d'un troisième message d'invitation au chat basé sur le protocole RCS et demandant l'établissement d'une troisième session de chat pour transmettre un chat, la troisième session de chat entre le second serveur IM (250) et le second dispositif électronique (202) est établie, et
sur la base du fait que les informations sur la fonction pouvant être prise en charge n'ont pas été obtenues (605) à partir de la base de données externe (230) :
suspendre (607) la transmission du premier message d'accusé de réception au premier dispositif électronique (201) jusqu'à ce que le deuxième message d'accusé de réception soit obtenu à partir du second serveur IM (250),
transmettre (609), au second serveur IM (250) au travers du module de communication (190), le deuxième message d'invitation au chat, dans lequel, sur la base de l'obtention (617), par le second serveur IM (250) à partir du second dispositif électronique (202) après la transmission (615) par le second serveur IM (250), du troisième message d'invitation au chat au second dispositif électronique (202), la troisième session de chat entre le second serveur IM (250) et le second dispositif électronique (202) est établie,
obtenir (619), à partir du second serveur IM (250) au travers du module de communication (190), le deuxième message d'accusé de réception pour établir la deuxième session de chat avec le second serveur IM (250), et
transmettre (621), au premier dispositif électronique (201) au travers du module de communication (190), le premier message d'accusé de réception pour établir la première session de chat avec le premier dispositif électronique (201).

2. Premier serveur IM (220) de la revendication 1, où les instructions qui, lorsqu'elles sont exécutées par l'au moins un processeur (120) individuellement ou collectivement, amènent le premier serveur IM (220) à :
transmettre un message relatif à un chat fourni à partir du premier dispositif électronique (201) au second dispositif électronique (202) à l'aide de la première session de chat, de la deuxième session de chat et de la troisième session de chat.

3. Premier serveur IM (220) de la revendication 1,
dans lequel le premier message d'invitation au chat, le deuxième message d'invitation au chat et le troisième message d'invitation au chat en tant que messages INVITE selon le protocole RCS, comprennent des informations sur une fonction pouvant être prise en charge du premier dispositif électronique (201).

4. Premier serveur IM (220) de la revendication 1,
dans lequel le premier message d'accusé de réception, le deuxième message d'accusé de réception et le troisième message d'accusé de réception en tant que messages 200 OK selon le protocole RCS, comprennent des informations sur la fonction pouvant être prise en charge du second dispositif électronique (202).

5. Premier serveur IM (220) de la revendication 1,
dans lequel les instructions, lorsqu'elles sont exécutées par l'au moins un processeur (120) individuellement ou collectivement, amènent en outre le premier serveur IM (220) à :
déterminer (807) si le premier dispositif électronique (201) et le second dispositif électronique (202) sont identiques, et
omettre (809, 909) de transmettre le deuxième message d'invitation au chat sur la base de l'identification du fait que le premier dispositif électronique (201) et le second dispositif électronique (202) sont identiques.

6. Premier serveur IM (220) de la revendication 5,
dans lequel les instructions, lorsqu'elles sont exécutées par l'au moins un processeur (120) individuellement ou collectivement, amènent le premier serveur IM (220) à :
sur la base de l'obtention d'un message relatif à un chat à partir du premier dispositif électronique (201), transmettre, à l'aide de la première session de chat, le message relatif au chat au premier dispositif électronique (201).

7. Procédé d'un premier serveur IM (220) comprenant un module de communication (190) et au moins un processeur (120), comprenant :
sur la base de l'obtention (401), à partir d'un premier dispositif électronique (201), d'un premier message d'invitation au chat basé sur un protocole de suite de communication riche, RCS, et demandant l'établissement d'une première session de chat pour transmettre un chat entre le premier dispositif électronique (201) et un second dispositif électronique (202), la demande (403) d'informations sur une fonction pouvant être prise en charge du second dispositif électronique (202) à partir d'une base de données externe (230) au travers du module de communication (190) ;
sur la base de l'obtention des informations sur la fonction pouvant être prise en charge à partir de la base de données externe (230) :
la transmission (407), au premier dispositif électronique (201) au travers du module de communication (190), d'un premier message d'accusé de réception basé sur le protocole RCS pour établir la première session de chat avec le premier dispositif électronique (201) ;
la transmission, à un second serveur IM (250) au travers des circuits de communication (190), d'un deuxième message d'invitation au chat basé sur le protocole RCS et la demande de l'établissement d'une deuxième session de chat pour transmettre un chat; et
l'obtention, à partir du second serveur IM (250) au travers du module de communication (190), d'un deuxième message d'accusé de réception basé sur le protocole RCS pour établir la deuxième session de chat avec le second serveur IM (250), dans lequel sur la base de l'obtention (419), par le second serveur IM (250) à partir du second dispositif électronique (202), d'un troisième message d'accusé de réception basé sur le protocole RCS après transmission (417), par le second serveur IM (250) au second dispositif électronique (202), d'un troisième message d'invitation au chat basé sur le protocole RCS et demandant l'établissement d'une troisième session de chat pour transmettre un chat, la troisième session de chat entre le second serveur IM (250) et le second dispositif électronique (202) est établie ; et
sur la base du fait que les informations sur la fonction pouvant être prise en charge n'ont pas été obtenues (605) à partir de la base de données externe (230) :
la suspension (607) de la transmission du premier message d'accusé de réception au premier dispositif électronique (201) jusqu'à ce que le deuxième message d'accusé de réception soit obtenu à partir du second serveur IM (250) ;
la transmission (609), au second serveur IM (250) au travers du module de communication (190), du deuxième message d'invitation au chat, dans lequel sur la base de l'obtention (617), par le second serveur IM (250) à partir du second dispositif électronique (202) après la transmission (615) par le second serveur IM (250), du troisième message d'invitation au chat au second dispositif électronique (202), la troisième session de chat entre le second serveur IM (250) et le second dispositif électronique (202) est établie ;
l'obtention (619), à partir du second serveur IM (250) au travers du module de communication (190), du deuxième message d'accusé de réception pour établir la deuxième session de chat avec le second serveur IM (250) ; et
la transmission (621), au premier dispositif électronique (201) au travers du module de communication (190), du premier message d'accusé de réception pour établir la première session de chat avec le premier dispositif électronique (201).

8. Procédé de la revendication 7,
dans lequel le procédé comprend en outre la transmission d'un message relatif à un chat fourni à partir du premier dispositif électronique (201) au second dispositif électronique (202) à l'aide de la première session de chat, de la deuxième session de chat et de la troisième session de chat.

9. Procédé de la revendication 7,
dans lequel le premier message d'invitation au chat, le deuxième message d'invitation au chat et le troisième message d'invitation au chat en tant que messages INVITE selon le protocole RCS, comprennent des informations sur une fonction pouvant être prise en charge du premier dispositif électronique (201).

10. Procédé de la revendication 9, comprenant en outre :
le fait de déterminer si le premier dispositif électronique (201) et le second dispositif électronique (202) sont identiques ; et
l'omission (809, 909) de transmettre le second message d'invitation au chat au dispositif côté appelé sur la base de l'identification du fait que le premier dispositif électronique (201) et le second dispositif électronique (202) sont identiques.

11. Procédé de la revendication 10, comprenant en outre :
sur la base de l'obtention d'un message relatif à un chat à partir du premier dispositif électronique (201), la transmission, à l'aide de la première session de chat, du message relatif au chat au premier dispositif électronique (201).
